# FASCICULE DE BREVET EUROPEEN

(11) **EP 1 774 397 B1**
(45) Date de publication et mention de la délivrance du brevet: **09.11.2011**
(21) Numéro de dépôt: 05793410.1
(22) Date de dépôt: 27.07.2005
(51) Int. Cl.: G02C 1/02

(54) **SYSTEME DE JUMELAGE DE VERRES DE LUNETTES SANS CERCLAGE**
SYSTEM ZUR PAARUNG VON BRILLENGLÄSERN OHNE UMREIFUNG
SYSTEM FOR PAIRING SPECTACLE GLASSES WITHOUT STRAPPING

(30) Priorité: 29.07.2004 FR 0408368
(43) Date de publication de la demande: 18.04.2007
(73) Titulaire: Lambert, François, 30220 Aigues Mortes (FR)
(72) Inventeur: Lambert, François, 30220 Aigues Mortes (FR)
(74) Mandataire: Cabinet Plasseraud
(86) Numéro de dépôt international: PCT/FR2005/001954
(87) Numéro de publication internationale: WO 2006/018540

(56) Documents cités:
- WO-A-01/96935
- FR-A- 1 193 800
- US-A- 4 102 566
- US-A- 5 771 086
- US-A- 5 847 800

## Description

La présente invention concerne un nouveau système de jumelage de verres de lunettes sans cerclage pour la correction des déficiences visuelles ou la protection des yeux.

On trouve aujourd'hui de plus en plus couramment chez les opticiens des lunettes dites du type percées, dont les verres ne sont pas cerclés par une monture mais sont reliés par un pont et maintenus par des vis.

FR-A-1 193 800 décrit des lunettes dont les verres sont reliés sans utilisation de vis à l'aide de fils métalliques et comportant une pièce de liaison centrale servant de pont aux deux verres.

US-A-5 771 086 décrit pour sa part une forme de lunettes comprenant deux verres indépendants solidarisés sans cerclage à l'aide d'un pont constitué d'un fil métallique. Les verres comprennent un crantage ménagé sur le bord du verre, du côté du nez, ainsi qu'un perçage pour le passage d'une vis.

Leur esthétique fait que ces articles rencontrent un succès commercial important. Ils présentent cependant un certain nombre d'inconvénients, et en particulier :
- Le champ visuel nasal n'est pas complet et souvent limité dans la partie supérieure coté nasal.
- Le porteur est souvent gêné par la vue des vis de fixation dans son champ de regard du coté du nez et dont les perturbations peuvent être insupportables si l'écart pupillaire du patient est faible (dans ce cas, le porteur est souvent obligé d'abandonner ce type de lunettes).
- Les formes de verres restent limitées à des formes classiques et peuvent être difficilement ergonomiques.

On connaît aussi des systèmes de jumelage de verres de lunettes comme décrit dans WO 01/96935 comprenant un élément de liaison central installé à l'avant des lunettes et muni de porte plaquettes s'insérant dans des crantages ménagés sur le côté des verres au dessus du nez. Mais les verres ont tendance à tourner l'un par rapport à l'autre.

Le dispositif selon la présente invention supprime ces inconvénients et maintient les verres de façon rigide, ce qui évite aux verres de tourner l'un par rapport à l'autre tout en rendant le montage et le démontage plus facile. Les porte-plaquettes ne sont plus solidaires de la face avant et sont indépendants et écartés l'un de l'autre. Ils sont placés de chaque coté du nez dans une position ergonomique et n'ont plus leur origine en plein milieu, ce qui était gênant et inconfortable et donnait une position très avancée des lunettes. Les porte-plaquettes ont l'avantage de pouvoir être ajustables séparément sans risque de tension ou de détérioration des verres comme cela pouvait être le cas dans un système monobloc. De même, ils peuvent être remplacés indépendamment. La surface en contact avec les verres est importante ce qui confère à l'ensemble une plus grande rigidité. Enfin, les verres peuvent être de différentes épaisseurs sans risque de problème au montage ou au démontage.

C'est pourquoi la présente demande a pour objet une paire de lunettes sans cerclage comprenant deux verres de lunettes accolés au-dessus du nez et de préférence munis chacun d'une saignée ménagée à la jonction des deux verres, lesdits verres étant couplés par un élément de liaison, **caractérisée en ce que** l'élément de liaison entre les deux verres comprend une languette constituant une patte d'assemblage (c'est à dire une pièce positionnant une autre pièce) pour les verres, en coopérant avec des saignées ménagées dans chacun des deux verres de lunettes.

Dans la présente invention, l'on entend par "paire de lunettes" tant la partie avant comprenant les verres, que la partie avant ainsi que ses branches latérales.

L'élément de liaison est de préférence dans sa forme la plus simple une barrette d'une longueur pouvant aller notamment de 6 mm à 20 mm pour une largeur de 1 à 3 mm munie d'une languette avantageusement installée en position médiane. Il peut avoir une forme simple comme une barrette allongée parallélépipédique ou elliptique aplatie ou peut avoir une forme plus complexe pour ajouter un caractère décoratif telle qu'une étoile, une calèche, etc... munie d'une languette. Sa largeur sera alors plus importante.

L'épaisseur moyenne d'une barrette est de préférence comprise entre 0,5 et 5 mm, hauteur de la languette exclue, notamment comprise entre 0,5 et 4 mm, tout particulièrement comprise entre 0,5 et 3 mm.

Une languette unique aura par exemple une longueur comprise entre 2 et 8 mm, de préférence comprise entre 2 et 6 mm, notamment comprise entre 2 et 4 mm, tout particulièrement comprise entre 2 et 3 mm. L'épaisseur moyenne de la languette sera par exemple comprise entre 0,5 et 5 mm, notamment comprise entre 0,5 et 4 mm, tout particulièrement comprise entre 0,5 et 3 mm. Sa forme sera de préférence parallélépipédique.

Une languette unique est avantageusement installée de manière médiane sur l'élément de liaison et notamment sur une barrette.,

L'élément de liaison est de préférence muni de vis fixes pour la fixation des verres à l'aide d'un écrou. Les vis de l'élément de liaison traversent alors un perçage ménagé sur le côté des verres au dessus du nez. L'élément de liaison peut simplement comprendre des percements pour la fixation des verres grâce à des vis indépendantes de l'élément de liaison.

L'élément de liaison est destiné à relier les deux verres accolés c'est-à-dire installés bord à bord et avantageusement à maintenir fermement les verres, notamment en rotation l'un par rapport à l'autre.

La languette de l'élément de liaison (ou les languettes) est (sont) agencée(s) pour coopérer avec la saignée ménagée de préférence sur le côté de chacun des verres, en s'insérant dans ladite saignée, cette dernière étant prévue de préférence au niveau où les verres sont installés bord à bord.

Dans des conditions préférentielles de mise en oeuvre, la saignée est exactement adaptée à la largeur de la languette, évitant ainsi le pivotement des verres.

Dans d'autres conditions préférentielles de mise en oeuvre de l'invention, l'élément de liaison comprend deux languettes, c'est-à-dire une languette unique interrompue.

Dans encore d'autres conditions préférentielles de mise en oeuvre de l'invention, l'élément de liaison comprend en outre deux baguettes aplaties comportant chacune d'un côté une languette de longueur inférieure ou égale à la moitié de la longueur de la languette de la barrette et de longueur inférieure ou égale à la longueur de la saignée ménagée sur le bord du verre au dessus du nez et comprenant aussi un trou pour le passage d'une vis ainsi que, de préférence de l'autre côté, une tige porte-plaquette nasale de confort.

La somme des épaisseurs des languettes prévues sur la barrette et sur les baguettes sera inférieure ou égale à l'épaisseur du verre le plus mince sur le bord au dessus du nez.

La languette des baguettes est elle aussi agencée pour coopérer avec la saignée ménagée de préférence sur le côté de chacun des verres.

Compte tenu de leur forme originale, les verres peuvent directement reposer sur le nez. Toutefois, dans des conditions préférentielles de mise en oeuvre de l'invention, l'élément de liaison comprend un organe d'appui nasal comprenant deux tiges porte-plaquettes de confort.

Les baguettes peuvent elles aussi être munies de vis fixes pour la fixation des verres à l'aide d'un écrou. Cette solution est cependant généralement la moins esthétique car les écrous se retrouveraient à l'extérieur, étant donné que l'élément de liaison, par exemple la barrette, est habituellement installé du côté extérieur par rapport aux verres et les baguettes du côté du visage.

De préférence, l'élément de liaison de l'invention comporte une barrette et des baguettes de forme sensiblement parallélépipédiques.

Si les verres peuvent être installés bord à bord selon une ligne de forme quelconque, dans d'autres conditions préférentielles de mise en oeuvre, les verres sont montés bord à bord par une tranche rectiligne, de préférence prévue au dessus de l'emplacement du nez.

Il est à noter aussi que la languette peut être constituée par la barrette elle-même. Pour cela, on peut fraiser la face, de préférence avant, des verres, sur une partie de l'épaisseur des verres, pour y insérer la barrette elle-même qui remplit donc une double fonction.

Les paires de lunettes objet de la présente invention possèdent de très intéressantes qualités.

Le porteur des lunettes selon l'invention a une vision proche de la réalité, plus naturelle en n'ayant pas de limite de champ au niveau interne, donc plus confortable.

En outre, les verres peuvent être remplacés indépendamment très facilement, en cas de rayure, de bris ou de modification de la vision au cours du temps.

De même, la monture peut être changée à tout moment par son utilisateur, qui peut ainsi posséder plusieurs montures pour un seul jeu de verres.

Le dispositif selon la présente invention maintient les verres de façon rigide ce qui évite aux verres de tourner l'un par rapport à l'autre tout en rendant le montage et le démontage plus facile.

Les porte-plaquettes ne sont pas solidaires de la face avant, sont indépendants et écartés l'un de l'autre. Ils peuvent être installés de chaque coté du nez dans une position ergonomique. De même, ils peuvent être remplacés indépendamment. La surface en contact avec les verres est importante, ce qui apporte une plus grande rigidité de l'ensemble. On peut aussi noter que les verres peuvent être d'épaisseur différente sans risque de problème au montage ou au démontage.

La présente demande a aussi pour objet un élément de liaison pouvant étre relié à des verres de lunettes munis de saignées au dessus du nez, ledit élément de liaison comprenant une languette languette constituant une patte d'assemblage (c'est à dire une pièce positionnant une autre pièce) pour des verres ainsi que deux vis ou deux perçages.

L'élément de liaison comprend de préférence en outre deux baguettes aplaties comportant chacune un trou pour le passage d'une vis ou comportant une vis, et d'un côté une languette de longueur inférieure ou égale à la moitié de la longueur de la languette. Les baguettes comprennent aussi avantageusement, de préférence de l'autre côté que leur languette, une tige porte-plaquette nasale de confort.

La présente demande a enfin pour objet un ensemble (kit) pour la réalisation de lunettes comprenant
- un élément de liaison ci-dessus, et optionellement ses accessoires tels que vis et écrous ou simplement écrous lorsque la barrette comporte des vis.
- un gabarit pour l'usinage des verres selon une forme permettant leur montage bord à bord.

Le gabarit se présente habituellement sous la forme d'un support physique d'un programme de contrôle de l'usinage des verres par un automate.

Les conditions préférentielles de mise en oeuvre des paires de lunettes ci-dessus décrites s'appliquent également aux autres objets de l'invention visés ci-dessus et en particulier aux éléments de liaison ci-dessus décrits.

L'invention sera mieux comprise si l'on se réfère aux dessins annexés sur lesquels
La figure 1 représente la partie centrale de deux verres accolés vue de face.
La figure 2 est une vue en coupe latérale d'un élément de liaison constitué d'une barrette.
La figure 3 est une vue en coupe latérale d'une variante de l'élément de liaison de la figure 2, dans laquelle les trous prévus pour des passages de vis sont remplacés par des vis solidaires de la barrette.
La figure 4 est une vue de dessus de l'élément de la figure 2 ou de la figure 3 vu du côté des vis.
La figure 5 est une vue de dessus d'une paire d'éléments complémentaires de liaison.
La figure 6 est une vue en coupe réalisée dans le plan des vis de la figure 3 d'une paire de lunettes montée à l'aide d'un élément de liaison de la présente invention comprenant une barrette et deux baguettes supplémentaires.
La figure 7 représente, en coupe, la partie centrale de deux verres accolés vue de dessus.
La figure 8 est une vue en coupe latérale d'une variante de l'élément de liaison de la figure 3, dans laquelle on trouve deux barrettes au niveau des vis, les trous prévus pour des passages de vis dans les verres et l'insertion des barrettes sont oblongs
La figure 9 est une variante de l'élément de liaison de la figure 8 destiné à des verres comportant un trou pour le passage de la vis, auquel est accolé une saignée réalisée par fraisage pour l'insertion de la barrette.

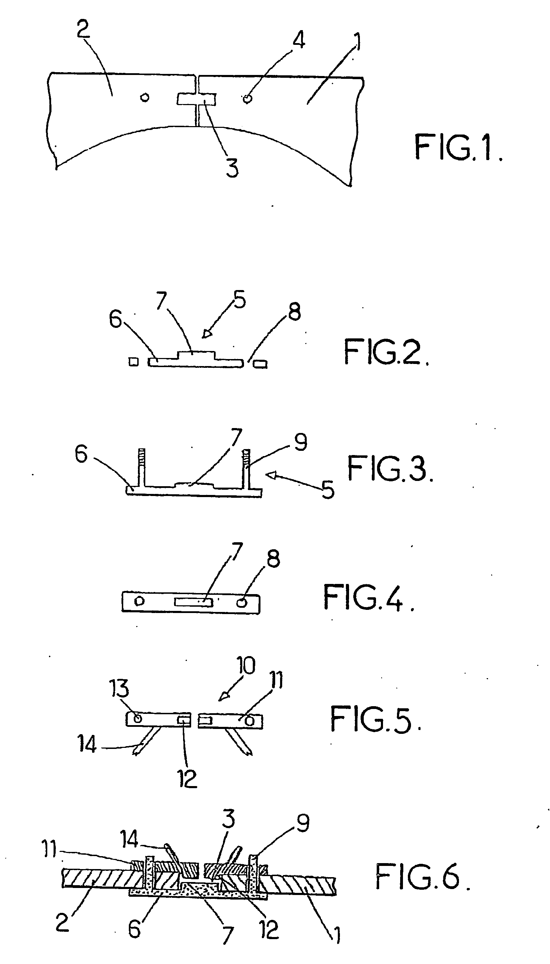

Sur la figure 1, on distingue le verre de droite 1 et le verre de gauche 2, représentés seulement en partie. Ces verres sont accolés l'un à l'autre au-dessus du nez, ils sont chacun munis d'une saignée 3, à la même hauteur ainsi que d'une perforation 4 destinée à être traversée par des vis. Les perforations 4 sont elles aussi à la même hauteur. Elles sont dans cette réalisation alignées avec les saignées 3 pour minimiser la largeur de l'élément de liaison 5 représenté ci-après.

Sur la figure 2, on peut observer un élément de liaison 5 qui est constitué d'une barrette 6 munie d'une languette 7 ainsi que de deux perforations 8, destinées à laisser le passage à des vis d'optique. La languette 7 est installée de manière médiane sur la barrette 6.

Sur la figure 3, on distingue également un élément de liaison 5 comprenant une barrette 6, ainsi qu'une languette 7, mais les perforations 8 ont été remplacées par des vis 9, dans le cas présent fixes et réalisées d'une pièce avec la barrette 6.

Sur la figure 4 qui est une vue de dessus, perpendiculaire à la précédente, on peut observer la languette 7 qui, dans cette version, n'occupe pas la totalité de la largeur de la barrette 6, ainsi que l'alignement de la languette 7, et des perforations 8.

Sur la figure 5, qui représente une paire d'éléments complémentaires de liaison 10, on peut distinguer sur chacun de ces éléments une baguette 11, munie elle aussi d'une languette 12, dont la longueur est approximativement égale à la moitié de la longueur d'une languette 7 d'une barrette 6 correspondante. La largeur de cette languette 12 est identique à celle de l'autre languette 7.

Sur la face opposée à la face de la baguette comportant la languette 12, est prévue une tige 14 (non représentée dans sa totalité) destiné, à son extrémité, à supporter une plaquette nasale de confort.

La figure 6 représente une paire de verres couplés grâce à un système de liaison selon la présente invention, comportant une barrette et deux baguettes complémentaires des fixations. On retrouve ici une paire de verres 1, 2. Les perçages ménagés dans ces verres sont traversés par des vis 9 prévues d'une pièce sur une barrette du type représenté à la figure 3.

La languette 7 dont est pourvue cette barrette 6 s'introduit dans l'espace libre procuré par les saignées 3 ménagées dans les verres.

Les verres 1, 2 sont pris en sandwich entre cette barrette 6, et deux éléments complémentaires de liaison 10 constitués chacun d'une baguette 11 dotée à son extrémité, dans le sens de la longueur, d'une languette 12 dont la longueur est approximativement égale à la moitié de longueur de la languette 7 dont est munie la barrette 6. Les vis 9 traversent non seulement les perforations 4 prévues dans les verres 1 et 2, mais également celles 8 prévues dans les baguettes, à l'extrémité opposée de celle portant la languette 12. Des vis, non représentées ici, installées du côté des baguettes 10, viennent bloquer l'ensemble.

On distingue enfin sur cette vue en coupe, les départs des tiges 14 prévues pour servir de support à des plaquettes de confort. Pour des raisons de compréhension de la figure, les jeux entre les différentes pièces ont été exagérés. Il est évident pour l'homme de l'art que ces jeux doivent être réduits au minimum pour d'une part permettre le montage et d'autre part conférer une excellente rigidité à l'ensemble.

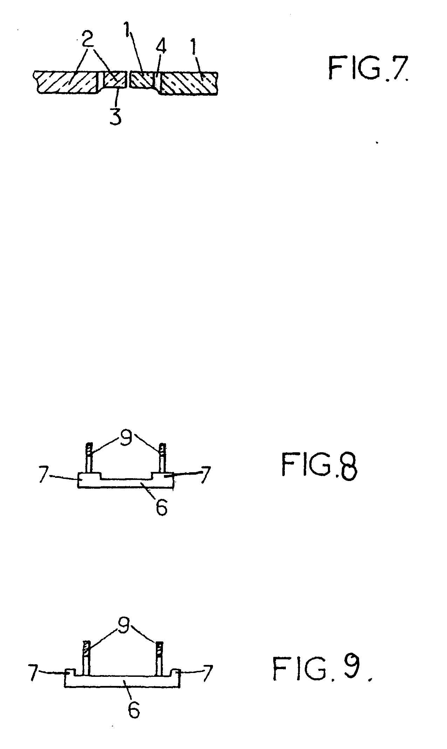

Sur la figure 7, on distingue les mêmes éléments que sur la figure 1, mais la saignée 3 traversant totalement les verres est remplacée par une saignée réalisée par fraisage sur une partie seulement de l'épaisseur des verres 1,2. On peut installer la barrette dans cette saignée réalisée par fraisage 3 et ainsi elle joue le double rôle de barrette et de languette.

Sur la figure 8, on observe que la languette n'est pas unique mais double. On trouve les deux demi-languettes aux extrémités de l'élément de liaison 5. On peut prévoir, selon la forme de ces languettes 7 des trous oblongs ou rectangulaires dans les verres de lunettes.

De même, sur la figure 9, les languettes 7 sont installées de part et d'autre des vis 9 de montage. On peut prévoir des saignées réalisées par par exempte rectangulaires accolés aux trous prévus dans les verres de lunettes pour l'installation des languettes.

Plusieurs des éléments de liaison ci-dessus ont été réalisés tant en version droite qu'en version courbe.

## Revendications

1. Une paire de lunettes sans cerclage comprenant deux verres de lunettes (1,2) accolés au-dessus du nez, lesdits verres étant couplés par un élément de liaison (5), **caractérisée en ce que** l'élément de liaison (5) entre les deux verres (1,2) comprend une languette (7) constituant une patte d'assemblage pour les verres (1,2) en coopérant avec des saignées (3) ménagées dans chacun des deux verres de lunettes (1,2).

2. Une paire de lunettes selon la revendication 1, **caractérisée en ce que** chacun des deux verres de lunettes (1,2) est muni d'une saignée (3) ménagée à la jonction desdits deux verres de'lunettes (1,2).

3. Une paire de lunettes selon la revendication 1 ou 2, **caractérisée en ce que** l'élément de liaison est une barrette d'une longueur de 6 mm à 20 mm pour une largeur de 1 à 3 mm.

4. Une paire de lunettes selon l'une des revendications 1 à 3, **caractérisée en ce que** la languette (7) est installée en position médiane sur l'élément de liaison (5).

5. Une paire de lunettes selon l'une des revendications 1 à 4, **caractérisée en ce que** la languette (7) a une longueur comprise entre 2 et 8 mm.

6. Une paire de lunettes selon l'une des revendications 1 à 5, **caractérisée en ce que** la languette (7) a une épaisseur moyenne comprise entre 0,5 et 5 mm.

7. Une paire de lunettes selon l'une des revendications 1 à 6, **caractérisée en ce que** l'élément de liaison (5) est muni de vis fixes (9) pour la fixation des verres à l'aide d'un écrou.

8. Une paire de lunettes selon l'une des revendications 1 à 7, **caractérisée en ce que** les saignées (3) sont exactement adaptées à la largeur de la languette (7), évitant ainsi le pivotement des verres.

9. Une paire de lunettes selon l'une des revendications 1 à 8, **caractérisée en ce que** l'élément de liaison (5) comprend en outre deux baguettes (11) aplaties comportant chacune d'un côté une languette (12) de longueur inférieure ou égale à la moitié de la longueur de la languette (7) et de longueur inférieure ou égale à la longueur de la saignée (3) ménagée sur le bord du verre au dessus du nez et comprenant aussi un trou (13) pour le passage d'une vis (9) ainsi qu'une tige (14) porte-plaquette nasale de confort.

10. Un élément de liaison (5) pouvant être relié à des verres de lunettes (1,2) munis de saignées au dessus du nez, **caractérisé en ce que** ledit élément de liaison (5) comprend une languette (7) constituant une patte d'assemblage pour les verres ainsi que deux vis (9) ou deux perçages (8).

11. Un élément de liaison (5) pour verres de lunettes selon la revendication 10, **caractérisé en ce que** dans le cas où l'élément de liaison (5) comprend les deux vis(9), l'élément de liaison (5) comprend en outre deux baguettes aplaties (11) comportant chacune un trou (13) pour le passage des vis (9) ou comportant une des vis, et d'un côté une languette (12) de longueur inférieure ou égale à la moitié de la longueur de la languette (7) de l'élément de liaison (5).

12. Un élément de liaison (5) pour verres de lunettes selon la revendication 11, **caractérisé en ce que** les baguettes aplaties (11) comprennent aussi une tige (14) porte-plaquette nasale de confort.

13. Un ensemble pour la réalisation de lunettes comprenant
- un élément de liaison selon la revendication 10, 11 ou 12 et optionnellement ses accessoires tels que des vis ou écrous
- un gabarit pour l'usinage des verres selon une forme permettant leur montage bord à bord.

## Claims

1. A pair of rimless spectacles comprising two spectacle lenses (1, 2) placed side by side above the nose, said lenses being coupled by a linking element (5), **characterized in that** the linking element (5) between the two lenses (1,2) comprises a tab (7) constituting a lug for assembling the lenses (1,2), cooperating with recesses (3) provided in each of the two spectacle lenses (1,2).

2. A pair of spectacles according to claim 1, **characterized in that** each of the two spectacle lenses (1, 2) is provided with a recess (3) arranged at the junction of said two lenses.

3. A pair of spectacles according to claim 1 or 2, **characterized in that** the linking element is a bar with a length of 6 mm to 20 mm for a width of 1 to 3 mm.

4. A pair of spectacles according to one of claims 1 to 3, **characterized in that** the tab (7) is fitted in a median position on the linking element (5).

5. A pair of spectacles according to one of claims 1 to 4, **characterized in that** the tab (7) has a length comprised between 2 and 8 mm.

6. A pair of spectacles according to one of claims 1 to 5, **characterized in that** the tab (7) has an average thickness comprised between 0.5 and 5 mm.

7. A pair of spectacles according to one of claims 1 to 6, **characterized in that** the linking element (5) is provided with fixed rods which are threaded (9) for fixing the lenses using a nut.

8. A pair of spectacles according to one of claims 1 to 7, **characterized in that** the recesses (3) are precisely adapted to the width of the tab (7), thus preventing swivelling of the lenses.

9. A pair of spectacles according to one of claims 1 to 8, **characterized in that** the linking element (5) further comprises two flattened strips (11) each comprising on one side a tab (12) with a length less than or equal to half of the length of the tab (7) of the bar and with a length less than or equal to the length of the recess (3) arranged on the edge of the lens above the nose and further comprising a hole (13) for the passage of a threaded rod (9) as well as a nose comfort pad arm rod (14).

10. A linking element (5) linkable to spectacle lenses (1, 2) provided with recesses above the nose **characterized in that** the said linking element (5) comprises a tab (7) constituting a lug for assembling the lenses and further comprising two threaded rods (9) or two pierced holes (8).

11. A linking element (5) for spectacle lenses according to claim 10, **characterized in that** in the case where the linking element (5) comprises two threaded rods (9), the linking element (5) further comprises two flattened strips (11) each comprising a hole (13) for the passage of threaded rods (9) or comprising threaded rods, and on one side a tab (12) with a length less than or equal to half of the length of the tab (7) of the linking element (5).

12. A linking element (5) for spectacle lenses according to claim 11, **characterized in that** the flattened strips (11) also include a nose comfort pad arm rod (14).

13. An assembly (kit) for producing spectacles comprising:
- a linking element according to claim 10, 11 or 12 and optionally its accessories such as screws and nuts
- a template for machining of the lenses according to a shape allowing their edge-to-edge mounting.

## Patentansprüche

1. Rahmenlose Brille mit zwei Brillengläsern (1, 2), die über der Nase aneinandergefügt sind, wobei die Gläser über ein Verbindungsteil (5) gekoppelt sind, **dadurch gekennzeichnet, dass** das Verbindungsteil (5) zwischen den beiden Gläsern (1, 2) eine Zunge (7) aufweist, die eine Montagelasche für die Gläser (1, 2) bildet, indem sie mit in jedes der beiden Brillengläser (1, 2) eingebrachten Einschnitten (3) zusammenwirkt.

2. Brille nach Anspruch 1, **dadurch gekennzeichnet, dass** die beiden Brillengläser (1, 2) jeweils mit einem Einschnitt (3) versehen sind, der an der Verbindungsstelle der beiden Brillengläser (1, 2) eingebracht ist.

3. Brille nach Anspruch 1 oder 2, **dadurch gekennzeichnet, dass** das Verbindungsteil ein Steg mit einer Länge von 6 mm bis 20 mm bei einer Breite von 1 bis 3 mm ist.

4. Brille nach einem der Ansprüche 1 bis 3, **dadurch gekennzeichnet, dass** die Zunge (7) in Mittelstellung an das Verbindungsteil (5) angebracht ist.

5. Brille nach einem der Ansprüche 1 bis 4, **dadurch gekennzeichnet, dass** die Zunge (7) eine Länge zwischen 2 und 8 mm hat.

6. Brille nach einem der Ansprüche 1 bis 5, **dadurch gekennzeichnet, dass** die Zunge (7) eine durchschnittliche Dicke zwischen 0,5 und 5 mm hat.

7. Brille nach einem der Ansprüche 1 bis 6, **dadurch gekennzeichnet, dass** das Verbindungsteil (5) mit festen Schrauben (9) zum Befestigen der Gläser mit Hilfe einer Mutter versehen ist.

8. Brille nach einem der Ansprüche 1 bis 7, **dadurch gekennzeichnet, dass** die Einschnitte (3) genau auf die Breite der Zunge (7) angepasst sind, wodurch das Verschwenken der Gläser vermieden wird.

9. Brille nach einem der Ansprüche 1 bis 8, **dadurch gekennzeichnet, dass** das Verbindungsteil (5) ferner zwei abgeflachte Stäbe (11) aufweist, die jeweils auf einer Seite eine Zunge (12) aufweisen, die in der Länge kleiner oder gleich der halben Länge der Zunge (7) und in der Länge kleiner oder gleich der Länge des über der Nase in den Glasrand eingebrachten Einschnitts (3) ist, und zudem ein Loch (13) für den Durchtritt einer Schraube (9) sowie einen Stift (14) für den Nasenauflagesteg aufweisen.

10. Verbindungsteil (5), das mit Brillengläsern (1, 2) verbunden werden kann, die mit Einschnitten über der Nase versehen sind, **dadurch gekennzeichnet, dass** das Verbindungsteil (5) eine Zunge (7), die eine Montagelasche für die Gläser bildet, sowie zwei Schrauben (9) bzw. zwei Bohrungen (8) aufweist.

11. Verbindungsteil (5) für Brillengläser nach Anspruch 10, **dadurch gekennzeichnet, dass** im Falle des Verbindungsteils (5) mit zwei Schrauben (9) das Verbindungsteil (5) ferner zwei abgeflachte Stäbe (11) aufweist, die jeweils ein Loch (13) für den Durchtritt der einen Schraube (9) bzw. eine der Schrauben aufweisen, sowie auf einer Seite eine Zunge (12), die in der Länge kleiner oder gleich der halben Länge der Zunge (7) des Verbindungselements (5) ist.

12. Verbindungsteil (5) für Brillengläser nach Anspruch 11, **dadurch gekennzeichnet, dass** die abgeflachten Stäbe (11) auch einen Stift (14) für den Nasenauflagesteg aufweisen.

13. Einrichtung zum Herstellen von Brillen, enthaltend:
- ein Verbindungsteil nach Anspruch 10, 11 oder 12 und wahlweise Zusatzteile hierfür, wie etwa Schrauben bzw. Muttern,
- eine Schablone zum Bearbeiten der Gläser nach einer Form, mit der sie stumpf aneinandergefügt werden können.
